# EUROPÄISCHE PATENTSCHRIFT

(11) **EP 1 616 649 B1**
(45) Veröffentlichungstag und Bekanntmachung des Hinweises auf die Patenterteilung: **29.02.2012**
(21) Anmeldenummer: 05105319.7
(22) Anmeldetag: 16.06.2005
(51) Int. Cl.: B23B 51/02, B23B 51/00, E21B 12/02

(54) **Bohrwerkzeug mit einem als Platte oder Kopf ausgebildeten Schneidelement und Verschleissmarkierung**
Drill bit with cutting plate or cutting head and wear mark
Forêt avec plaquette ou tête de coupe et des marques-indicateurs d'usure

(30) Priorität: 15.07.2004 DE 102004034061
(43) Veröffentlichungstag der Anmeldung: 18.01.2006
(73) Patentinhaber: ROBERT BOSCH GMBH, 70442 Stuttgart (DE)
(72) Erfinder: Moser, Bernhard, 88361 Altshausen (DE); Widmann, Rainer, 88213 Ravensburg (DE)

(56) Entgegenhaltungen:
- EP-A- 1 270 162
- DE-A1- 19 859 624
- US-A1- 2003 188 895

## Beschreibung

Die Erfindung betrifft ein Bohrwerkzeug gemäß dem Oberbegriff des Anspruchs 1.

Aus der DE 197 34 093 A1 ist ein Bohrwerkzeug mit einem als Platte ausgebildeten Schneidelement mit wenigstes einer Querseite bekannt, bei welchem die Querseite der Schneidplatte zur Führung des Bohrwerkzeugs im Bohrloch dient. Beim bestimmungsgemäßen Gebrauch des Bohrwerkzeugs tritt eine Abnutzung der Schneidplatte an den Querseiten auf, welche dazu führt, dass die mit dem Bohrwerkzeug hergestellten Bohrlöcher zunehmend einen kleineren Durchmesser aufweisen. Bei zu stark abgenutzten Bohrwerkzeugen weisen die hergestellten Bohrlöcher dann ein Untermaß auf, welches beispielsweise das Einschieben eines Dübels verhindert. Ein solches Untermaß kann nur mit Hilfsmitteln wie einem Messschieber oder einer Schablone erkannt werden.

Weiterhin ist aus der DE 100 24 435 A1 ein Werkzeug bekannt, welches im Stirnbereich als Verschleißmarkierung eine mit Lot gefüllte Vertiefung aufweist. Mit einer derartigen Verschleißmarkierung ist zwar ein Erfassen des Verschleißes eines stirnseitigen Bereichs, aber keine Kontrolle des Durchmessers eines Bohrwerkzeugs möglich.

Dokument EP 1 270 162 A1 zeigt ein Bohrwerkzeug entsprechend dem Oberbegriff von Anspruch 1. In den Querseiten der dort gezeigten Schneidelemente ist jeweils eine achsparallele Rille ausgeführt, die der radialen Verschleißkontrolle dient. Nach hoher Beanspruchung des Werkzeugs sind derartigen Rillen nicht immer sicher als Verschleißmarkierung erkennbar. In diesen Rillen kann sich zudem Bohrklein ansammeln und zu einer erhöhten Reibung führen.

Der Erfindung liegt die Aufgabe zugrunde, ein Bohrwerkzeug zu entwickeln, an welchem ein Erreichen des minimal erforderlichen Bohrwerkzeug-Durchmessers D ohne Hilfswerkzeug erkennbar ist.

Diese Aufgabe wird ausgehend von den Merkmalen des Oberbegriffs des Anspruchs 1 erfindungsgemäß durch die kennzeichnenden Merkmale des Anspruchs 1 gelöst. In den Unteransprüchen sind vorteilhafte und zweckmäßige Weiterbildungen angegeben.

Das erfindungsgemäße Bohrwerkzeug weist an einer radial nach außen weisenden Querseite einen Führungsbereich und einen Vergleichsbereich auf, der Vergleichsbereich ist gegenüber dem Führungsbereich radial zu einer Längsachse des Bohrwerkzeugs hin um einen Verschleißabstand a zurückversetzt. Durch die erfindungsgemäße Ausführung des gewölbten Vergleichsbereichs ist es möglich durch einen Vergleich des Übergangs des Führungsbereichs in den Vergleichsbereich ohne Hilfsmittel festzustellen, ob der Führungsbereich bereits bis auf den Durchmesser des Vergleichsbereichs abgenutzt ist, da in diesem Fall der Führungsbereich nahtlos in den Vergleichsbereich übergeht und für den Betrachter im Übergangsbereich keine Kante mehr erkennbar ist. Dies ist besonders einfach erkennbar, da das Vorhandensein einer Übergangskante ein mit dem Auge leicht erkennbares Lichtspiel erzeugt. Insofern nutzt die Erfindung einen optischen Indikator, welcher sein Erscheinungsbild signifikant verändern, wenn der Durchmesser des Bohrwerkzeugs ein kritisches Maß erreicht hat. Dieser optische Verschleißindikator ist erfindungsgemäß am Umfangsbereich eines Schneidelements verwirklicht.

Wesentlich ist somit die Erfassung des Verschleißes an einem Umfangsbereich eines Schneidelements eines Bohrwerkzeugs durch einen Absatz bzw. eine Stufe, welche einen radialen Verschleißabstand a definiert, wobei die Abnutzung der Stufe im bestimmungsgemäßen Gebrauch des Bohrwerkzeugs das Erreichen eines minimal zulässigen Durchmessers anzeigt. Die Angleichung des Führungsbereichs an den Vergleichsbereich erfolgt gemäß der Erfindung durch eine während des bestimmungsgemäßen Gebrauchs fortschreitende Abnutzung des an der Bohrlochwand entlangreibenden Führungsbereichs. Hierzu ist der Verschleißabstand a in der Größenordnung von wenigen 1/10 mm vorgesehen. Die erfindungsgemäßen Bohrwerkzeuge sind insbesondere als Mauerbohrer, nämlich Hammerbohrer, Schlagbohrer und Drehbohrer ausgebildet und zur Bearbeitung fester Materialien vorgesehen.

Die Erfindung sieht insbesondere vor, den Verschleißabstand a in einer Größenordnung von etwa 0,05 mm bis 0,5 mm auszubilden. Diese Werte geben in etwa die Differenzen zwischen den maximalen und den minimalen zulässigen Abmessungen für den Radius von Bohrwerkzeugen mit Schneidendurchmessern D von 4 mm bis 52 mm wieder. Somit gilt für erfindungsgemäße Bohrwerkzeuge: Der Radius rf des Führungsbereichs entspricht der Hälfte eines maximal zulässigen Durchmessers D des Bohrwerkzeugs und der Radius rv des Verschleißbereichs entspricht der Hälfte eines minimal zulässigen Durchmessers D des Bohrwerkzeugs. Der Verschleißabstand berechnet sich nach der Formel a = rf - rv.

Weiterhin sieht die Erfindung insbesondere vor, den Führungsbereich und den Vergleichsbereich benachbart zueinander anzuordnen. Hierdurch ist der unmittelbare Vergleich dieser Bereiche möglich.

Die Erfindung sieht insbesondere auch vor, das Schneidelement aus Hartmetall auszubilden, da sich beim Formgebungsverfahren für Hartmetallplatten unterschiedlich orientierte Bereiche im Umfangsbereich der Schneidplatte einfach realisieren lassen. Selbstverständlich kann das Schneidelement auch aus einem anderen geeigneten Material wie z.B. PKD (Poly Kristaliner Diamant) gefertigt sein.

Erfindungsgemäß ist es weiterhin vorgesehen, den Führungsbereich als Führungsfläche oder als Führungskante auszubilden. Derartige Gestaltungen der Hartmetallplatte lassen sich mit einfachen Mitteln verwirklichen.

Die Erfindung sieht vor, den Vergleichsbereich in Drehrichtung des Bohrwerkzeugs hinter dem Führungsbereich anzuordnen und hierdurch einen Vergleich der beiden Bereiche in einer senkrecht zur Längsachse liegenden Vergleichsebene zu ermöglichen.

Weiterhin ist es vorgesehen den Führungsbereich über die gesamte Höhe der Querseite des Schneidelements auszubilden, um eine gute Führung des Bohrwerkzeugs im Bohrloch zu gewährleisten.

Schließlich sieht die Erfindung auch vor, den Vergleichsbereich nur über einen Teil der Höhe der Querseite des Schneidelements auszubilden, da dieser nur im Bereich der größten Abnutzung benötigt wird.

Weitere Einzelheiten der Erfindung werden in der Zeichnung anhand von schematisch dargestellten Ausführungsbeispielen beschrieben.

Hierbei zeigt:
- Figur 1a:: eine Seitenansicht eines Ausführungsbeispiels eines Bohrerkopfes mit einer eingebetteten Schneidplatte und einen angedeuteten Bohrerschaft,
- Figur 1b:: eine Draufsicht auf die in der Figur 1a dargestellte Schneidplatte, wobei auf die Darstellung des Bohrerschafts verzichtet wurde,
- Figur 1c:: eine Seitenansicht der Schneidplatte aus einer Pfeilrichtung Ic,
- Figur 1d:: ein Detail Id der in der Figur 1b dargestellten Draufsicht auf die Schneidplatte,
- Figur 2:: sieben Gestaltungs varianten von Führungsbereich und Vergleichsbereich in einer schematischen Schnittdarstellung, wobei die Darstellungen D2 bis D7 nicht von der Erfindung erfasste Beispiele betreffen und nur D1 ein erfindungs- gemäßes Ausführungbeispiel zeigt,
- Figur 3:: drei Varianten für die Gestaltung einer Querseite 6 eines Schneidelements 3.

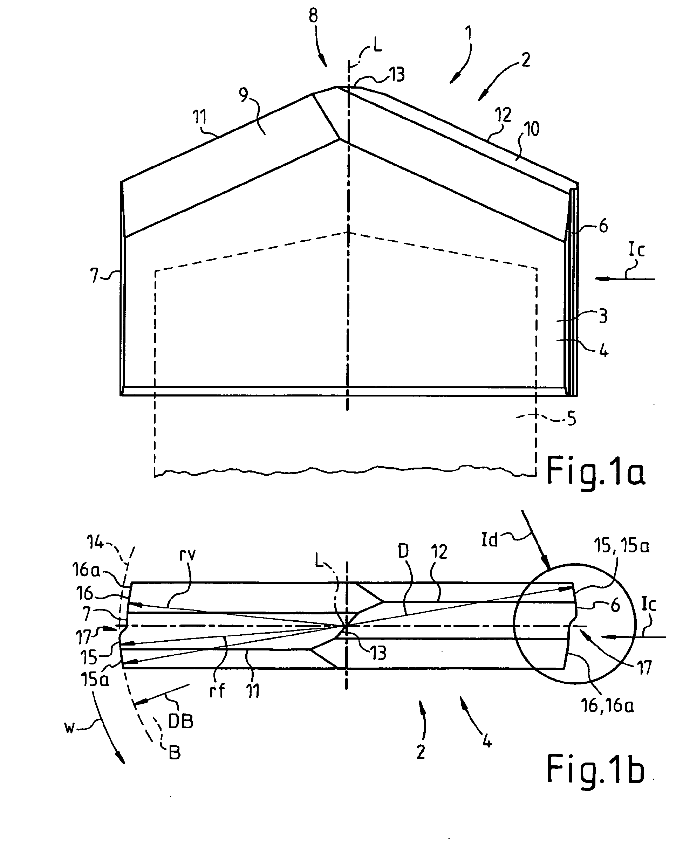

In der Figur 1a ist ein Bohrerkopf 1 eines Bohrwerkzeugs 2 dargestellt. Der Bohrerkopf 1 umfasst eine als Schneidelement 3 ausgebildete Schneidplatte 4 aus Hartmetall. Die Schneidplatte 4 ist in einen angedeuteten Schaft 5 eingebettet, welcher in eine nicht dargestellte Förderwendel übergeht. Die Schneidplatte 4 weist in bezug auf eine Längsachse L radial nach außen gerichtete und über den Schaft 5 überstehende Querseiten 6 und 7 auf. Zu einer Bohrerspitze 8 hin gehen die Querseiten 6 und 7 in Schneidflächen 9 und Freiflächen 10 über, welche jeweils eine Schneidkante 11 bzw. 12 bilden, die wiederum über eine Querschneide 13 aneinander übergehen (siehe auch Figur 1b). Das Schneidelement kann auch ohne Querschneide 13 bzw. mit einer Zentrierspitze .ausgebildet sein.

In der Figur 1b ist die in der Figur 1a dargestellte Schneidplatte 4 in Draufsicht dargestellt, wobei auf eine Darstellung des Schaftes verzichtet wurde. Im Bohrbetrieb dreht sich das Bohrwerkzeug 2 in eine Drehrichtung w um die Längsachse L. Hierbei reiben die Querseiten 6 und 7 an einer mit einer gestrichelten Linie angedeuteten Bohrlochwand 14 eines Bohrlochs B mit einem Durchmesser DB. Die symmetrisch zu der Längsachse L gestalteten Querseiten 6 und 7 weisen jeweils einen Führungsbereich 15 und einen Vergleichsbereich 16 auf. Der Führungsbereich 15 ist erfindungsgemäß als gewölbte Führungsfläche 15a ausgebildet, welche sich parallel zu der Längsachse L erstreckt und durch einen Radius rf definiert ist. Die Vergleichsfläche 16 ist als gewölbte Vergleichsfläche 16a ausgebildet, welche sich parallel zu der Längsachse L erstreckt und durch einen Radius rv definiert ist. Im Betrieb des Bohrwerkzeugs 2 reibt der Führungsbereich 15 bzw. die Führungsfläche 15a an der Bohrlochwand 14 und wird hierdurch abgenutzt. Solange rf > rv ist der Vergleichsbereich 16 bzw. die Vergleichsfläche 16a relativ frei von Reibung. Dies führt zu einer allmählichen Verringerung des Radius rf, welcher sich mit fortschreitender Abnutzung dem Radius rv des Vergleichbereichs 16 annähert und schließlich diesem entspricht. Sobald sich die Radien rf und rv entsprechen ist das Bohrwerkzeug 2 hinsichtlich des Durchmessers DB, welchen das mit dem Bohrwerkzeug 2 erzeugte Bohrloch B aufweist, soweit abgenutzt, dass dieses ausgetauscht werden sollte. Für den Anwender ist dies mit bloßem Auge erkennbar, da die Führungsfläche 15 und die Vergleichsfläche 16 ab diesem Zeitpunkt nahtlos und absatzlos ineinander übergehen. Somit ist eine durch den Übergang der beiden Flächen 15, 16 gebildete Stufe 17 nicht mehr vorhanden und somit auch nicht mehr erkennbar. Selbstverständlich geht dem Verschleiß des Führungsbereichs 15 ein Verschleiß der Schneiden 11 und 12 voraus, die einen wirksamen Durchmesser D des Bohrwerkzeugs definieren. Die Schneidkanten 11 und 12 der Schneidplatte 4 nutzen sich am Übergang in die Querseiten 6 bzw. 7 ab. Somit stellen der Führungsbereich 15 und der Verschleißbereich 16 auch einen indirekten Indikator für den Verschleiß bzw. die Verkürzung der Schneidkanten 11 und 12 im radial außen liegenden Bereich der Schneidplatte 4 dar.

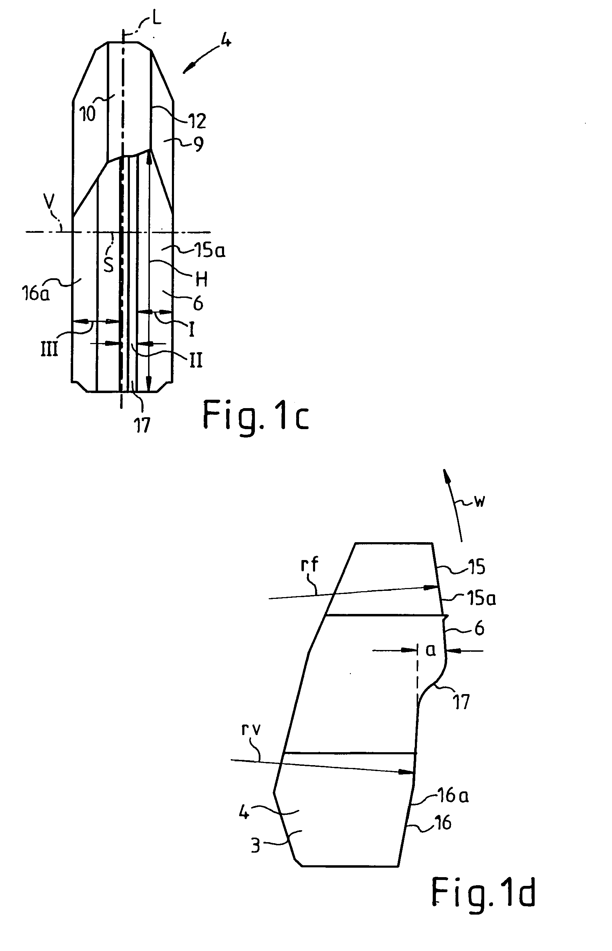

In der Figur 1c ist eine Seitenansicht aus einer in den Figuren 1a und 1b dargestellten Pfeilrichtung Ic auf die Schneidplatte 4 gezeigt. In dieser Ansicht wird die Unterteilung der Querseite 6 in die Führungsfläche 15a und die Vergleichsfläche 16a, welche über die Stufe 17 ineinander übergehen, nochmals deutlich. Die gewölbte Führungsfläche 15a erstreckt sich unterhalb der Schneidkante 12 bzw. unterhalb der Schneidfläche 9 und einem Teil der Freifläche 10 über einen Bogenabschnitt I über die gesamte Höhe H der Querseite 6. Die Stufe 17 nimmt zur Überwindung eines Verschleißabstands a (siehe Figur 1d), welcher sich aus der Differenz der Radien rf und rv (siehe Figur 1b) errechnet, einen Bogenabschnitt II in Anspruch. Die Vergleichsfläche 16a erstreckt sich schließlich über einen Bogenabschnitt III, welcher unterhalb der Freifläche 10 liegt. Der Vergleich der Führungsfläche 15a mit der Vergleichsfläche 16a erfolgt an der Schnittlinie S, welche eine senkrecht zur Längsachse L liegenden Vergleichsfläche V mit der Führungsfläche 15a, der Vergleichsfläche 16a und der Stufe 17 bildet. Sobald der zu erfassende Verschleiß des Bohrwerkzeugs 2 bzw. der Schneidplatte 4 eingetreten ist gehen die beiden Flächen 15a, 16a im Bereich der Schnittlinie S ohne Ausbildung der Stufe 17 ineinander über.

Für neue Bohrwerkzeuge sind Schneidelemente vorgesehen, welche entsprechend ihrem Durchmesser beispielsweise etwa die folgenden Verschleißabstände a aufweisen:

| | | | | | | | |
|---|---|---|---|---|---|---|---|
| Durchmesser D der Schneidplatte in mm | 4-10 | 11-18 | 19-30 | 32-37 | 40-45 | 52 | > 52 |
| Verschleißabstand a in mm | 0,05 bis 0,125 | 0,05 bis 0,15 | 0,05 bis 0,175 | 0,05 bis 0,225 | 0,05 bis 0,275 | 0,05 bis 0,3 | 0,05 bis 0,5 |

In der Praxis können auch andere Werte verwendet werden.

In der Figur 1d ist ein Detail Id aus der in der Figur 1b gezeigten Draufsicht auf die Schneidplatte 4 dargestellt. Entgegen der Drehrichtung betrachtet folgt an der Querseite 6 auf die Führungsfläche 15a die Vergleichsfläche 16a, wobei die Stufe 17 den Verschleißabstand a, die Differenz zwischen den Radien rf und rv der beiden Flächen 15a, 16a, überbrückt.

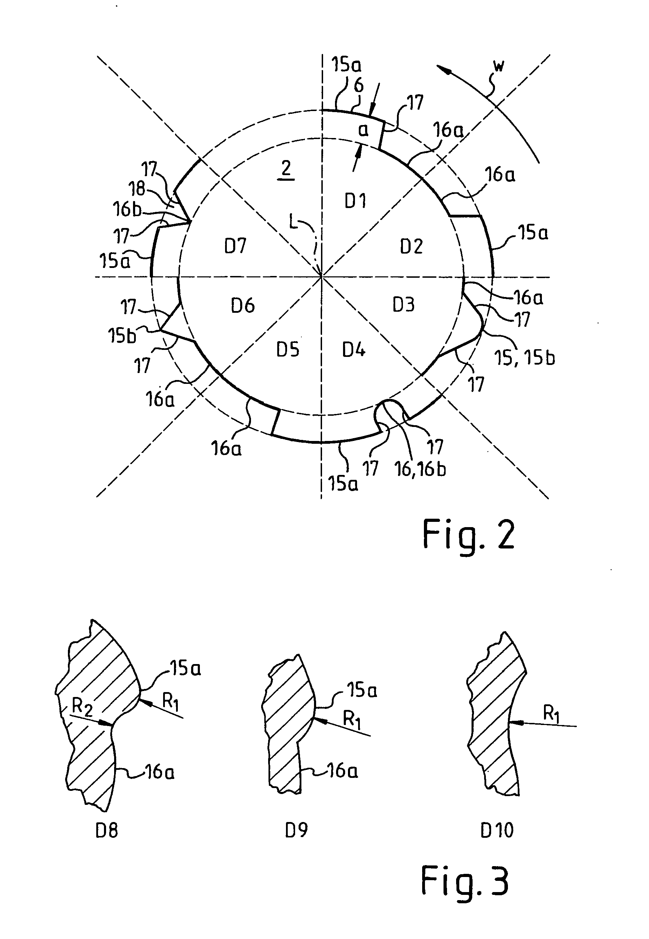

In der Figur 2 sind sieben Beispiele für die Gestaltung einer Querseite 6 eines Schneidelements 3 eines Bohrwerkzeugs 2 schematisch dargestellt.

Die Darstellung D1 zeigt erfindungsgemäß eine etwa dem in den Figuren 1a bis 1d gezeigten Ausführungsbeispiel entsprechende Gestaltung der Querseite 6 mit einer gewölbten Führungsfläche 15a und einer gewölbten Vergleichsfläche 16a, welche durch eine Stufe 17 verbunden sind und zueinander einen Verschleißabstand a aufweisen.

Die nicht von der Erfindung erfasste Darstellung D2 zeigt im Gegensatz zur Darstellung D1 eine Vergleichsfläche 16a, welche einer Führungsfläche 15a in einer Drehrichtung w vorauseilt.

In der nicht von der Erfindung erfassten Darstellung D3 ist ein Führungsbereich 15 als Führungskante 15b ausgebildet, welche parallel zu einer Längsachse L des Bohrwerkzeugs 2 verläuft und aus einer gewölbten Vergleichsfläche 16a über Stufen 17 hervorspringt.

In der nicht von der Erfindung erfassten Darstellung D4 ist der Vergleichsbereich 16 als Vergleichskante 16b ausgebildet, welche parallel zu einer Längsachse L des Bohrwerkzeugs 2 verläuft und in eine gewölbte Führungsfläche 15a unter Ausbildung von Stufen 17 eingebracht ist.

Die nicht von der Erfindung erfasste Darstellung D5 zeigt eine an die Darstellung D1 angelehnte Form, bei welcher eine Vergleichsfläche 16a nicht gewölbt, sondern als ebene Ebene ausgebildet ist.

Die nicht von der Erfindung erfasste Darstellung D6 zeigt eine an die Darstellung D3 angelehnte Form, bei welcher eine Führungskante 15b zusammen mit Stufen 17 im Querschnitt dreieckförmig ausgebildet ist und in eine gewölbte Vergleichsfläche 16a übergeht.

Die nicht von der Erfindung erfasste Darstellung D7 zeigt schließlich eine an die Darstellung D4 angelehnte Form, bei der die Vergleichskante 16b mit den Stufen 17 eine V-förmige Kerbe 18 in der gewölbten Führungsfläche 15a bildet.

Figur 3 zeigt drei weitere Varianten für ein Ausführungsbeispiel mit D8 bis D10. In D8 sind zwei Radien R₁, R₂ angegeben, die nicht zwingend gleich groß sind. Der Übergang der Führungsfläche 15a zur Vergleichsfläche 16a ist mit den Radien R₁, R₂ abgerundet ausgestaltet. Die Variante D9 zeigt nur einen Übergangsradius R₁ zwischen der Führungsfläche 15a und Vergleichsfläche 16a mit konvexer Wölbung. Die Variante D10 zeigt das gleiche mit konkaver Wölbung des Radius R₁.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch einen schräg zu Längsachse gerichteten oder S-förmigen oder radial umlaufenden Verlauf eines Führungsbereichs auf der Querseite des Schneidelements vor.

## Patentansprüche

1. Bohrwerkzeug (2) mit einem als Platte (4) oder Kopf ausgebildeten Schneidelement (3) mit wenigstes einer radial nach außen gerichteten Querseite (6, 7), welche zur Führung des Bohrwerkzeugs (2) in einem Bohrloch (B) dient, wobei an der Querseite (6, 7) ein Führungsbereich (15, 15a, 15b) und
ein Vergleichsbereich (16, 16a, 16b) ausgebildet ist, wobei der Vergleichsbereich (16, 16a, 16b) gegenüber dem Führungsbereich (15, 15a, 15b) radial zu einer Längsachse (L) des Bohrwerkzeugs (2) um einen Verschleißabstand (a) zurückversetzt ist und wobei der Vergleichsbereich (16, 16a,
16b) in Drehrichtung (w) des Bohrwerkzeugs (2) hinter dem Führungsbereich (15, 15a, 15b) liegt, **dadurch gekennzeichnet, dass** der Vergleichsbereich (16) als gewölbte
Vergleichsfläche (16a) ausgebildet ist, die sich mit einem Radius (rv) parallel zu der Längsachse (L) erstreckt, wobei die gewölbte Vergleichsfläche (16a) durch einen Radius (rv) um die Längsachse (L) definiert ist und wobei sich die gewölbte Vergleichsfläche (16a) parallel zu der Längsachse (L) erstreckt.

2. Bohrwerkzeug nach Anspruch 1, **dadurch gekennzeichnet,**
**dass** der Verschleißabstand (a) in einer Größenordnung von etwa 0,05 mm bis 0,5 mm und insbesondere etwa 0,1 mm bis 0,3 mm liegt.

3. Bohrwerkzeug nach einem der vorhergehenden Ansprüche, **dadurch gekennzeichnet, dass** ein Radius (rf) des Führungsbereichs (15, 15a, 15b) der Hälfte eines maximal zulässigen Durchmessers (D) des Bohrwerkzeugs (2) und ein Radius (rv) des Verschleißbereichs (16, 16a, 16b) der Hälfte eines minimal zulässigen Durchmessers (D) des Bohrwerkzeugs (2) entspricht.

4. Bohrwerkzeug nach einem der vorhergehenden Ansprüche,
**dadurch gekennzeichnet, dass** der Führungsbereich (15, 15a,
15b) und der Vergleichsbereich (16, 16a, 16b) nebeneinander angeordnet sind.

5. Bohrwerkzeug nach einem der vorhergehenden Ansprüche,
**dadurch gekennzeichnet, dass** das Schneidelement (3) aus Hartmetall oder aus einem PKD-Material (Poly-Kristaliner Diamant) ausgebildet ist.

6. Bohrwerkzeug nach einem der vorhergehenden Ansprüche,
**dadurch gekennzeichnet, dass** der Führungsbereich (15) als Führungsfläche (15a) ausgebildet ist.

7. Bohrwerkzeug nach einem der vorhergehenden Ansprüche,
**dadurch gekennzeichnet, dass** der Führungsbereich (15) als Führungskante (15b) ausgebildet ist.

8. Bohrwerkzeug nach einem der vorhergehenden Ansprüche, **dadurch gekennzeichnet, dass** sich der Führungsbereich (15, 15a, 15b) über die gesamte Höhe (H) der Querseite (6, 7) des Schneidelements (3) erstreckt.

9. Bohrwerkzeug nach einem der vorhergehenden Ansprüche, **dadurch gekennzeichnet, dass** sich der Vergleichsbereich (16, 16a, 16b) nur über einen Teil der Höhe (H) der Querseite (6, 7) des Schneidelements (3) erstreckt.

## Claims

1. Drilling tool (2) with a cutting element (3) which is designed as a tip (4) or head and has at least one transverse side (6, 7) which is directed radially outwards and which serves to guide the drilling tool (2) in a drill hole (B), wherein a guide region (15, 15a, 15b) and a comparison region (16, 16a, 16b) are formed on the transverse side (6, 7), wherein the comparison region (16, 16a, 16b) is set back from the guide region (15, 15a, 15b) radially relative to a longitudinal axis (L) of the drilling tool (2) by a wear distance (a), and wherein the comparison region (16, 16a, 16b) lies behind the guide region (15, 15a, 15b) in the direction of rotation (w) of the drilling tool (2), **characterized in that** the comparison region (16) is designed as an arched comparison surface (16a) which extends with a radius (rv) parallel to the longitudinal axis (L), wherein the arched comparison surface (16a) is defined by a radius (rv) about the longitudinal axis (L) and wherein the arched comparison surface (16a) extends parallel to the longitudinal axis (L).

2. Drilling tool according to Claim 1, **characterized in that** the wear distance (a) is in the order of magnitude of about 0.05 mm to 0.5 mm and in particular about 0.1 mm to 0.3 mm.

3. Drilling tool according to either of the preceding claims, **characterized in that** a radius (rf) of the guide region (15, 15a, 15b) corresponds to half a maximum permissible diameter (D) of the drilling tool (2) and a radius (rv) of the wear region (16, 16a, 16b) corresponds to half a minimum permissible diameter (D) of the drilling tool (2).

4. Drilling tool according to one of the preceding claims, **characterized in that** the guide region (15, 15a, 15b) and the comparison region (16, 16a, 16b) are arranged next to one another.

5. Drilling tool according to one of the preceding claims, **characterized in that** the cutting element (3) is formed from carbide or from a PCD material (polycrystalline diamond).

6. Drilling tool according to one of the preceding claims, **characterized in that** the guide region (15) is designed as a guide surface (15a).

7. Drilling tool according to one of the preceding claims, **characterized in that** the guide region (15) is designed as a guide edge (15b).

8. Drilling tool according to one of the preceding claims, **characterized in that** the guide region (15, 15a, 15b) extends over the entire height (H) of the transverse side (6, 7) of the cutting element (3).

9. Drilling tool according to one of the preceding claims, **characterized in that** the comparison region (16, 16a, 16b) extends only over part of the height (H) of the transverse side (6, 7) of the cutting element (3).

## Revendications

1. Outil de forage (2) présentant un élément de coupe (3) configuré en plaque (4) ou en tête et présentant au moins un côté transversal (6, 7) orienté vers l'extérieur et servant à guider l'outil de forage (2) dans un trou foré (B),
une partie de guidage (15, 15a, 15b) et une partie d'équilibrage (16, 16a, 16b) sur le côté transversal (6, 7),
la partie d'équilibrage (16, 16a, 16b) étant en retrait radial d'une distance d'usure (a) par rapport à un axe longitudinal de l'outil de forage (2) (L) vis-à-vis de la partie de guidage (15, 15a, 15b) et la partie d'équilibrage (16, 16a, 16b) étant située en aval de la partie de guidage (15, 15a, 15b) dans le sens de rotation (w) de l'outil de forage (2),
**caractérisé en ce que**
la partie d'équilibrage (16) est configurée comme surface d'équilibrage bombée (16a) à rayon (rv) qui s'étend parallèlement à l'axe longitudinal (L),
**en ce que** la surface d'équilibrage bombée (16a) est définie par un rayon (rv) autour de l'axe longitudinal (L) et
**en ce que** la surface d'équilibrage bombée (16a) parallèlement à l'axe longitudinal (L).

2. Outil de forage selon la revendication 1, **caractérisé en ce que** la distance d'usure (a) est de l'ordre d'environ 0,05 mm à 0,5 mm et en particulier d'environ 0,1 mm et 0,3 mm.

3. Outil de forage selon l'une des revendications précédentes, **caractérisé en ce que** le rayon (rf) de la partie de guidage (15, 15a, 15b) correspond à la moitié du diamètre maximal admissible (D) de l'outil de forage (2) et le rayon (rv) de la partie d'équilibrage (16, 16a, 16b) à la moitié du diamètre minimal admissible (D) de l'outil de forage (2).

4. Outil de forage selon l'une des revendications précédentes, **caractérisé en ce que** la partie de guidage (15, 15a, 15b) et la partie d'équilibrage (16, 16a, 16b) sont disposées l'une à côté de l'autre.

5. Outil de forage selon l'une des revendications précédentes, **caractérisé en ce que** l'élément de coupe (3) est formé d'un métal dur ou d'un matériau dit PKD ("Poly Kristaliner Diamant" - diamant polycristallin).

6. Outil de forage selon l'une des revendications précédentes, **caractérisé en ce que** la partie de guidage (15) est configurée comme surface de guidage (15a).

7. Outil de forage selon l'une des revendications précédentes, **caractérisé en ce que** la partie de guidage (15) est configurée comme arête de guidage (15b).

8. Outil de forage selon l'une des revendications précédentes, **caractérisé en ce que** la partie de guidage (15, 15a, 15b) s'étend sur toute la hauteur (H) du côté transversal (6, 7) de l'élément de coupe (3).

9. Outil de forage selon l'une des revendications précédentes, **caractérisé en ce que** la partie d'équilibrage (16, 16a, 16b) ne s'étend que sur une partie de la hauteur (H) du côté transversal (6, 7) de l'élément de coupe (3).
